# EUROPEAN PATENT APPLICATION

(11) **EP 1 607 733 A1**
(43) Date of publication of application: **21.12.2005**
(21) Application number: 05012645.7
(22) Date of filing: 13.06.2005
(51) Int. Cl.: G01N 3/56

(54) **Rolling ball tribometer**

(30) Priority: 14.06.2004 US 580004 P; 08.06.2005 US 147183
(71) Applicant: AIR PRODUCTS AND CHEMICALS, INC., Allentown, PA 18195-1501 (US)
(72) Inventor: Zurecki, Zbigniew, Macungie, PA 18062 (US); Ghosh, Ranajit, Macungie, PA 18062 (US); Grimm, Lance Michael, Bowmanstown, PA 18030-0145 (US)
(74) Representative: Schwabe - Sandmair - Marx

(57) **Abstract**

This invention is directed to a tribological apparatus and method incorporating a ball, a support, and means for maintaining a substantially constant force between the ball and a test surface. The ball rolls against the rotating test surface producing a wear track. Analysis relating to wear and fatigue can be performed on the test surface subsequent to producing the wear track.

## Description

### BACKGROUND OF THE INVENTION

Functionally critical parts like bearings, bearing races, valves, medical implants, gears, etc. undergo abrasive or adhesive wear in service. The performance of such a part in a demanding application is directly related to the quality of the machined surface, including its surface finish, surface and subsurface hardness and residual stress pattern. However, the wear behavior and fatigue life of a part is also dependant on the work material composition, microstructure and heat treatment process of the starting material, and as such, predictive modeling of fatigue life is often fraught with inaccuracies and simplistic assumptions. Conducting actual wear or fatigue life tests are often the only true gauge of part performance.

Fatigue tests involve application of a specified mean load (which may be zero), as well as an alternating load (axial, torsional or flexural) to the part to be tested and then the number of cycles required to produce failure under the loads, are recorded. Standard fatigue test procedures are described in the "Manual of Fatigue Testing" (ASTM STP 91-A).

Standard ASTM wear test methods are described in procedure G83-96 (for similar or dissimilar metals in rolling contact) or G99-04 (for sliding contact, using a pin-on-disk apparatus). However, both fatigue tests and rolling contact wear tests are extremely time consuming, expensive and require dedicated test equipment. In addition, part testing is usually limited to standard samples, and not actual parts. The pin-on-disc test is rarely used for functionally critical parts and is mostly limited to academic and qualitative measurements.

Related disclosures include U.S. Pat. Nos. 5,795,990; 5,679,883; 5,315,860; 4,966,030; and 4,958,511. There is a need for a quick and inexpensive way to test the wear and fatigue resistance of parts that may be suitable for use on the floor of a machining shop.

### BRIEF SUMMARY OF THE INVENTION

This invention is a process and apparatus for tribological analysis of a machined or non-machined part using a rolling ball. The apparatus and process may be suitable for use with standard machine shop equipment, such as a lathe, an optical device to measure dimensions, and optionally, a dynamometer.

The apparatus comprises:
a ball;
a support for said ball for holding said ball in contact with said part and allowing said ball to roll with three degrees of rotational freedom against said part; and
means for maintaining a force on said ball against said part. The support may be adapted for mounting on a tool post or turret plate such as a linear table or equivalent positioning means, preferably with positioning in two axes.

A method for tribological analysis, which comprises: placing a ball having three degrees of rotational freedom in contact with a part; maintaining a force between the ball and the part; and moving the part relative to the ball causing the ball to roll against said part to create a wear track in the part.

The part is preferably moved rotationally or linearly back-and-forth relative to the ball. The current inventions may provide a simple, inexpensive way for measuring and comparing the wear behavior of machined and unmachined surfaces, and may shorten the evaluation time for a part (from several hours or days to less than 1 hour).

The current inventions may provide flexibility to test actual parts, (and not specially prepared parts of a particular geometry), including cylindrical and other non-flat surfaces, making it possible to test actual parts for quality control or for process and material optimization. The current inventions may be used to test parts for wear or fatigue with or without lubricant or fluid under or around the rolling ball, or to test parts in a corrosive fluid, such as salt water, or with corrosive fluid under or around the rolling ball.

These inventions may be used in conjunction with existing machining equipment, e.g. a lathe, or other machine tool for holding the part or the apparatus of the invention, a shop microscope or a magnifying glass with graded scale or other optical device to measure the wear and fatigue caused by the apparatus or process of the invention, as opposed to buying a dedicated, expensive wear-testing machine. In some embodiments, stand-alone work-holding equipment that rotates can be used to provide the movement of the part relative to the ball.

### BRIEF DESCRIPTION OF SEVERAL VIEWS OF THE DRAWINGS

FIG. 1 is a view in cross section of one embodiment of the apparatus of the invention showing a ball in a support where a force is provided by a spring.

FIG. 2 is a view in cross section of a second embodiment of the invention showing a ball in a support where a force can be provided by a fluid.

FIG. 3 is graph of data showing results using the apparatus of the invention.

FIG. 4 is a schematic showing the apparatus of the invention mounted in a lathe.

### DETAILED DESCRIPTION OF THE INVENTION

This invention is directed to a tribological apparatus incorporating a ball, a support, and means to apply a substantially constant force on the ball against a part. Additionally this invention provides a process for effecting wear and/or fatigue of a part for the purpose of tribological analysis. These inventions are particularly useful for testing parts that have been machined, although parts that have not been machined may be tested using the apparatus or process of these inventions.

To facilitate an understanding of the tribological apparatus suited for effecting wear and/or fatigue of a part, reference is made to the figures. (Identical numbers have been used in the figures to represent identical elements in the different embodiments of the apparatus shown.) Any part may be tested using an apparatus or process of this invention including parts that will undergo abrasive or adhesive wear in normal (future) service. The part to be tested can be made of a metal or non-metal, such as plastics or composites. The part to be tested can be machined or heat treated. The part can be a composite material having a coating layer where the coating may comprise a metal, inorganic or organic materials, or a combination thereof.

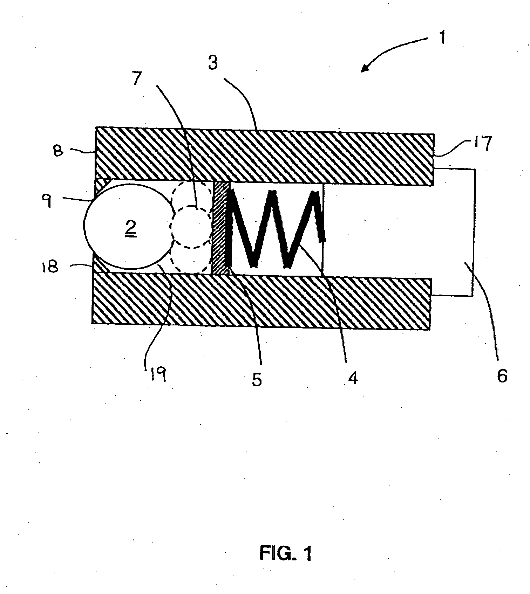

The cross-section of the tribological apparatus 1 according to a first embodiment of the current invention is shown in FIG. 1. The device comprises a support 3, a spherical ball 2, a space 19 in the support to receive the ball, optional supporting balls 7, a back plate 5, a compression spring 4, and a retainer 6.

The support 3 can be made from carbon steel, or stainless steel or any suitable material that resists deformation when the apparatus is in use. The support 3 may be suitable for mounting on a tool post or turret plate or any other linear table or equivalent positioning means. Tool posts, turret plates, linear tables and equivalents thereof are well known to those skilled in the art of machining. Preferably the linear table provides positioning in at least two axes. The support is formed to accommodate the ball 2. As shown in FIG. 1, the front end 8 of the support has an opening 9 to allow ball 2 to protrude from the opening 9, but the front end 8 is shaped to hold ball 2 in the support 3 or means are provided in or attached to the support, such as a circular metal collar 18 or the like to hold the ball within the support 3.

Ball 2 may be inert, meaning that it is non-reactive with the part to which it is contacted for testing. Additionally it may be inert to the other elements of the tribological device, and/or the lubricants or corrosive fluids that may contact the part during testing of the part. Ball 2 may be rigid, meaning that it has a Rockwell or Brinell hardness that is at least the same as, or greater than two times, or greater than three times, the Rockwell or Brinell hardness of the part to be tested. Ball 2 may have a surface roughness that is at least the same as and preferably substantially lower than the surface roughness of the part tested. The ball can comprise any suitable hard material such as metallic, ceramic, diamond, or mixtures thereof in alloyed or composite form, or the ball may comprise coatings with metallic, ceramic, diamond, or mixtures thereof in alloyed or composite form. Metallic materials include hardened steels and heat treated powdered materials. Hardened steels include such materials as tool steels. Ceramic materials can be ceramic oxide, ceramic nitride, or ceramic carbide. Examples of ceramic oxides are alumina, sapphire, zirconia, and yttria. Examples of ceramic nitrides are silicon nitride, and cubic boron nitride. Examples of ceramic carbides are silicon carbide, titanium carbide, tungsten carbide and tantalum carbide.

The diameter of ball 2 is smaller than the diameter or width of the space 19 in the support. As shown in FIG. 1, ball 2 rolls against the part (not shown), particularly a test surface of the part and against the optional supporting balls 7. The support is designed to allow the ball 2 three degrees of rotational freedom within the support.

Ball 2 is optionally supported by three smaller supporting balls 7. These supporting balls 7 can be made of any of the same materials listed above for ball 2. The material selected for supporting balls 7 should be non-reactive with ball 2, and optional lubricants and corrosive materials used to test the part. Although three balls are shown, more or fewer can be used. The supporting balls 7 may be used to minimize the friction between the ball 2 and the means for maintaining a substantially constant force on said ball, and optionally any other alignment means or other element provided within the support that would otherwise contact the ball directly. As shown, the supporting balls 7 may have a smaller diameter than ball 2. As shown, the diameter of the cylindrical space 19 within the support 3 is at least slightly larger than the diameter of ball 2 and should be large enough so that the longitudinal axis of the space 19 in the support is normal to the plane formed by the centers of the supporting balls.

The apparatus shown in FIG. 1 further comprises a back plate 5 in contactor force-providing communication with the optional supporting balls 7. In an alternative embodiment (not shown) the back plate 5 could be in direct contact with ball 2 if supporting balls 7 are not used. Back plate 5 can be made from any of the same materials as listed above for ball 2, and is preferably made from ceramic. In a further alternative embodiment that is not shown, an alternative low friction material or element could be used instead of the supporting balls between the ball 2 and the back plate 5.

Back plate 5 is in force-providing communication with compression spring 4. The compression spring 4 provides a force to the ball 2 by mechanical means. The compression spring is selected based on its normal force and displacement characteristics. A suitable compression spring will provide a desired normal force over the range of spring displacement during the test. In some embodiments, the force is substantially constant throughout the test. The desired normal force is generally 1 to 100 kg (9.8 to 980N), preferably 1 to 10 kg (9.8 to 98 N).

As shown in FIG. 1, the ball 2, optional supporting balls 7, back plate 5, and compression spring 4 are all held in the back end 17 of the support by retainer 6. Retainer 6 can be a cap screw, bolt, or other suitable device. Alternatively, in another embodiment, the compression spring could be located between the support and the equipment to which the support is mounted.

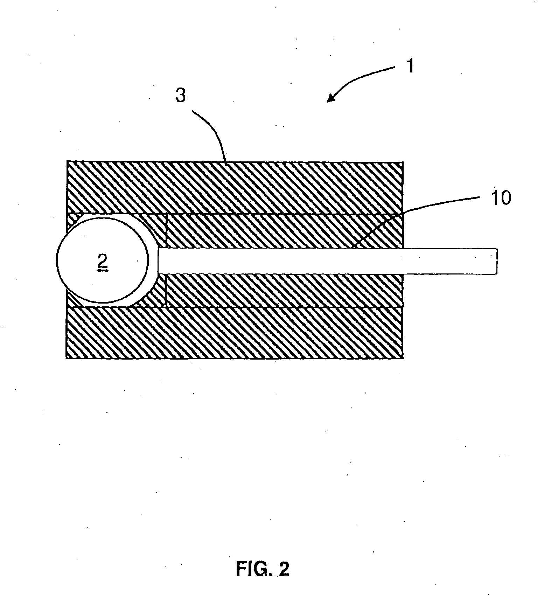

The cross-section of the tribological apparatus according to another embodiment of the current invention is shown in FIG. 2. The device comprises a support 3, a spherical ball 2, a conduit 10 for introducing a fluid to provide a force on the ball 2. The fluid can be a gas or a liquid thereby providing a force on ball 2 by pneumatic or hydraulic means.

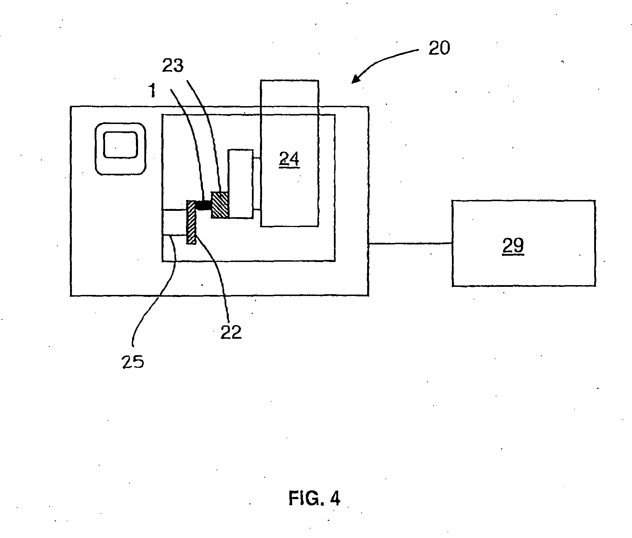

The tribological apparatus 1, illustrated schematically in FIG. 4, is shown as part of a machining device 20 which may be a lathe or other suitable device that provides rotation or other repetitive movement. As shown, the tribological apparatus of this invention is mounted on a linear table 24 so that the ball 2 (not shown in FIG 4) is in contact with the part 22 to be tested that is mounted on a chuck or other work-holding device that moves or rotates 25. A substantially constant force is applied on the test surface of the part 22 through ball 2. The force between the ball 2 and the test surface of the part 22 is determined by the spring constant for the embodiment shown in FIG. 1 in which a spring is used to provide the substantially constant force against the ball and the part, and is optionally determined and/or monitored by hooking up the apparatus to a dynamometer 23 to measure the force on the ball provided by the spring. For the second embodiment shown in FIG 2, in which the force is applied through pneumatic or hydraulic means, the force between the ball and the part is determined from the supply pressure of the fluid.

The part may be held in a suitable fixture in a machining device, such as a lathe chuck, and is caused to rotate, preferably at a constant rpm. During the test, the part can be rotated at an angular speed of 100 to 10,000 rpm, preferably 2,500 to 5,000 rpm, in order to accumulate the desired number of fatigue load cycles. The contact surface speed, as determined by the rpm and rolling diameter of the part can range from 1 to 100,000 ft/min (from 0.005 to 508 m/s) to mimic the intended part service conditions. In the embodiment shown in FIG. 4, the tribological apparatus does not rotate, only the part is rotated by the lathe. Additionally, in the embodiment shown in FIG. 4, the ball of the tribological apparatus moves when in frictional contact with the part to be tested, and is otherwise stationary, that is, it does not otherwise roll, rotate or move.

The ball 2 rolls against the test surface of the part and against the support balls 7, if present. Optionally, cooling and/or lubrication may be applied to the contact area between ball 2 and the test surface of the part to prevent overheating and scouring of the test surface of the part or to test the effects of various lubricants on the part. Conditions similar to operation in future service of the part can be simulated. The ball rolls against the rotating test surface of the part producing a wear track. The duration of the test is generally from 1 minute to 100 hours, preferably from 5 minutes to 2 hours, and most preferably from 10 to 30 minutes. The total number of cycles is large. For example, a 60 minute duration at 3500 rpm gives 210,000 cycles. The growth of the wear track can be measured over time using a shop microscope or a simple stereoscope and compared if desired to parts made of different materials or made under different processing conditions.

The apparatus separately or within a system, like the one shown in FIG 4 is optionally automated with suitable data acquisition and control equipment 29. The data acquisition and control equipment may be set up to communicate directly with the dynamometer to measure and monitors the force on the part imparted by the ball.

The embodiments described consist of an apparatus mounted on a machining device; however, it is within the scope of this invention to build a complete tribological apparatus having the means to rotate the part relative to the ball.

After the wear track is formed on the part, the part can be analyzed by visually measuring the width of the wear track and/or by using any one of the following analytical methods: atomic force microscopy, Auger electron spectroscopy, Vickers or Knoop hardness, X-ray diffraction, and scanning electron microscopy in order to acquire any additional information pertaining to topographical, microstructural and/or compositional changes developed by using the apparatus or process of this invention to create the wear track on a part to perform wear and fatigue testing. These analytical methods are well known in the art. Measurements using the analytical methods are preferably made both inside and outside of the wear track.

The following example is provided to illustrate the invention and is not intended to restrict the scope thereof.

### Example

### Tribological Analysis of Various Machined Parts

The apparatus of the current invention was constructed and used to compare the wear of parts prepared by various machining conditions.

The support of the tribological device was constructed of carbon steel and machined to accommodate a rigid, inert, spherical ball. The rigid, inert, spherical ball was a sapphire ball with a diameter of 0.250 inch. Three ultrafine-grained alumina supporting balls with a diameter of 0.125 inch aligned the sapphire ball in the support. The diameter of the hole in the support that accommodated the balls was 0.270 inch, thereby providing a loose fit. The force to the sapphire ball was created by a compression spring. The compression spring had a free length of 0.440 inch, a spring rate of 174.9 lb/in (30.63 N/mm), and a load of 16.17 lb (71.92 N) at a length of 0.348 inch. A ceramic back plate was used between the compression spring and the ceramic supporting balls.

Three test parts were prepared, each undergoing different machining conditions on a commercially available horizontal lathe. All three test parts were cut 0.020 inch with a feed of 0.003 inch per revolution at a speed of 600 surface feet per minute. One part was machined dry using a polycrystalline cubic boron nitride (PCBN) cutting tool, another was machined while flooded with a 6% oil/water emulsion coolant using a PCBN cutting tool, and a third was machined with liquid nitrogen (LIN) cooling using an Al₂O₃ cutting tool.

Parts were tested, one at a time, using the tribological apparatus of the current invention. The parts were placed in a lathe to provide rotation. The tribological apparatus was placed in a linear table so that the sapphire ball of the tribological apparatus was placed in contact with each part. The spring was compressed to about half of its allowable compression. A dynamometer was used to confirm the force of the ball on the part.

With the tribological apparatus in place, parts were rotated at 3,500 rpm using a 6% oil/water emulsion coolant for various test times. In this example, the wear track width was measured using a simple shop stereoscope (low-magnification of 25x) allowing optical measurements with the accuracy of 0.001 inches (25 micrometers). Each part was tested for a specified time and the track width measured. Then, the part was placed back in the lathe, subjected to the tribological apparatus and the track width measured again. This process was repeated for a total test time of 60 minutes for each part.

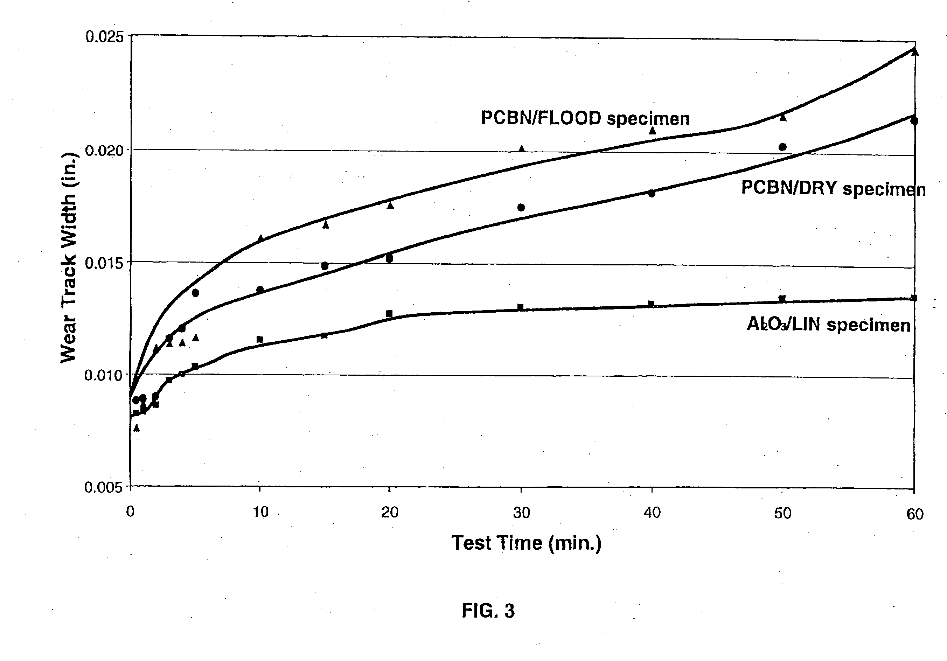

FIG. 3 shows the wear track width versus the test time. The results show that the part cut dry had a narrower track width than the part cut flooded with emulsion coolant. The part cut using LIN had an even narrower track width than the part cut dry. This indicates that the parts cut using LIN have better wear resistance than parts cut dry, which has a better resistance than the parts cut using the emulsion coolant.

## Claims

1. An apparatus for the tribological analysis of a part comprising:
a ball;
a support for said ball for holding said ball in contact with a part and for providing the ball with three degrees of rotational freedom; and a means for maintaining a force on said ball against said part.

2. The apparatus of claim 1 wherein said support is adapted for mounting said apparatus on a machining device.

3. The apparatus of claim 1 wherein the means for maintaining the force is a compression spring.

4. The apparatus of claim 3 further comprising at least three supporting balls in contact with said ball.

5. The apparatus of claim 4 further comprising a back plate between said supporting balls and said compression spring.

6. The apparatus of claim 5 wherein said back plate is comprised of ceramic.

7. The apparatus of claim 1, wherein said force is a substantially constant force.

8. The apparatus of claim 4 wherein said supporting balls are smaller than said ball.

9. The apparatus of claim 1 further comprising means for moving said part relative to said ball.

10. The apparatus of claim 9, wherein said means for moving rotates said part relative to said ball.

11. The apparatus of claim 10, wherein said means for rotating is a machining device.

12. The apparatus of claim 1 wherein said ball is rigid and inert.

13. A method for tribological analysis, which comprises:
placing a ball having three degrees of rotational freedom in contact with a part;
maintaining a force between the ball and the part; and
moving the part relative to the ball to create a wear track in the part.

14. The method of claim 13 wherein said moving step comprises rotating said part.

15. The method of claim 14 wherein said rotating step occurs at a substantially constant speed.

16. The method of claim 14, wherein the part is rotated between 100 to 100000 rpm.

17. The method of claim 13 further comprising the step of:
lubricating the part and the ball.

18. The method of claim 13 further comprising the step of:
cooling the part and ball.

19. The method of claim 13 further comprising the step of:
measuring the width of the wear track.

20. The method of claim 13, further comprising the step of:
analyzing the wear track of the part using an analytical method selected from the group consisting of atomic force microscopy, Auger electron spectroscopy, Vickers or Knoop hardness, X-ray diffraction, and scanning electron microscopy.
